(19) Europäisches Patentamt
European Patent Office
Office européen des brevets

(11) Veröffentlichungsnummer: **0 467 906 B1**

(12) **EUROPÄISCHE PATENTSCHRIFT**

(45) Veröffentlichungstag der Patentschrift: **10.08.94**

(51) Int. Cl.5: **C08L 33/06**, C08L 51/00, C08K 5/54, C09J 151/00, C09J 133/06

(21) Anmeldenummer: **90905469.4**

(22) Anmeldetag: **07.04.90**

(86) Internationale Anmeldenummer:
**PCT/EP90/00552**

(87) Internationale Veröffentlichungsnummer:
**WO 90/12065 (18.10.90 90/24)**

Die Akte enthält technische Angaben, die nach dem Eingang der Anmeldung eingereicht wurden und die nicht in dieser Patentschrift enthalten sind.

# (54) WÄSSRIGE KUNSTHARZDISPERSIONEN.

(30) Priorität: **12.04.89 DE 3911945**

(43) Veröffentlichungstag der Anmeldung:
**29.01.92 Patentblatt 92/05**

(45) Bekanntmachung des Hinweises auf die Patenterteilung:
**10.08.94 Patentblatt 94/32**

(84) Benannte Vertragsstaaten:
**BE DE FR GB IT NL**

(56) Entgegenhaltungen:
**EP-A- 0 214 696**
**DE-A- 3 219 442**
**US-A- 4 077 932**
**US-A- 4 097 643**

**Patent Abstracts of Japan, volume 13, No 278 (C-611)(3626) 26 June 1989 & JP A 175577**

**Patent Abstracts of Japan, volume 10, No 148 (C-350) (2205), 29 May 1986 & JP A 617369**

(73) Patentinhaber: **BASF Aktiengesellschaft**
**Carl-Bosch-Strasse 38**
**D-67063 Ludwigshafen(DE)**

(72) Erfinder: **SCHLARB, Bernhard**
**Blieskasteler Strasse 12**
**D-6700 Ludwigshafen(DE)**
Erfinder: **AUCHTER, Gerhard**
**Paray-le-Monial-Strasse 10**
**D-6702 Bad Duerkheim(DE)**
Erfinder: **PFOEHLER, Peter**
**Franz-Stuetzel-Strasse 51**
**D-6720 Speyer(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

**Beschreibung**

Die vorliegende Erfindung betrifft wäßrige Kunstharzdispersionen, bestehend aus

A) 35 bis 60 Gew.% Kunstharz, erhältlich durch räumlich getrennt ausgeführte und/oder durch nacheinander, jedoch räumlich vereint ausgeführte radikalische Lösungspolymerisation in einem organischen Lösungsmittel von 15 bis 70 Gew.-Teilen Gemisches A1 und 30 bis 85 Gew.-Teilen eines Gemisches A2, zusammengesetzt aus

A1:

a) 1,5 bis 15 Gew.% wenigstens eines Monomeren aus der Gruppe gebildet aus 3 bis 5 C-Atome enthaltenden $\alpha,\beta$-monoethylenisch ungesättigten Monocarbonsäuren, solchen Dicarbonsäuren, Anhydriden und Halbestern dieser Dicarbonsäuren mit 1 bis 8 C-Atome tragenden Alkanolen oder mit Glycolmonoethern (Monomere I)

b) 65 bis 98,5 Gew.% wenigstens eines Monomeren aus der Gruppe gebildet aus Acryl- und Methacrylsäureestern von $C_1$- bis $C_{10}$-Alkanolen (Monomere II),

c) 0 bis 10 Gew.% eines oder mehrerer Monomerer aus der Gruppe gebildet aus Acryl- und Methacrylsäureestern von $C_{11}$- bis $C_{20}$-Alkanolen (Monomere III),

d) 0 bis 20 Gew.% eines oder mehrerer vinylaromatischer Monomeren (Monomere IV),

e) 0 bis 5 Gew.% eines oder mehrerer Mercaptosilane der allgemeinen Formel I (Verbindung V)

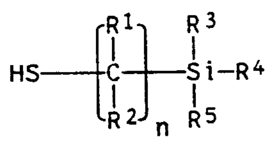

I,

in der die Variablen folgende Bedeutung haben:

| | |
|---|---|
| n | 1 bis 8 |
| $R^1$, $R^2$ | unabhängig voneinander Wasserstoff oder $C_1$- bis $C_4$-Alkylgruppen |
| $R^3$,$R^4$,$R^5$ | unabhängig voneinander $C_1$- bis $C_6$-Alkylgruppen oder $C_1$- bis $C_6$-Alkoxygruppen, mit der Maßgabe, daß mindestens einer der Reste $R^3$ bis $R^5$ eine Alkoxygruppe ist |

und

f) 0 bis 10 Gew.% eines oder mehrerer sonstiger copolymerisierbarer Monomeren (Monomere VI),

A2:

a) 60 bis 100 Gew.% wenigstens eines Monomeren II,

b) 0 bis 10 Gew.% eines oder mehrerer Monomeren III,

c) 0 bis 30 Gew.% eines oder mehrerer Monomeren IV und VI und

d) 0 bis 5 Gew.% einer oder mehrerer Verbindungen V,

mit der Maßgabe, daß die Summe aus A1 und A2 zu mehr als 65 % ihres Gewichtes solche Monomere II, deren Homopolymerisate eine Glastemperatur von 0 bis -70 °C aufweisen, sowie eine von 0 verschiedene Menge an Verbindungen V enthält,

B) bezogen auf das Kunstharz A, 0,05 bis 5 Gew.% wenigstens eines Silans der allgemeinen Formel II

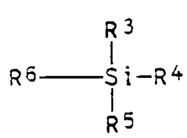

II,

in der $R^6$ ein eine Epoxy-Gruppe tragender Rest ist,

C) wirksamen Mengen mindestens einer Verbindung ausgewählt aus der Gruppe gebildet aus Ammoniak und organischem Amin, d.h. einer solchen Menge, daß der pH-Wert der erfindungsgemäßen Dispersion 6 bis 10 beträgt,

D) 0 bis 5 Gew.% des organischen Lösungsmittels, in dem die Lösungspolymerisation durchgeführt wurde, und

E) Wasser als Rest.

Weiterhin betrifft die Erfindung die Herstellung dieser Kunstharzdispersionen und die Verwendung ihrer Verfilmungen als Haftklebstoffe für selbstklebende Artikel.

Wäßrige Kunstharzdispersionen, deren Verfilmungen als Haftklebstoffe geeignet sind, werden gewöhnlich nach dem Verfahren der radikalischen Emulsionspolymerisation unter Verwendung hydrophiler Hilfsstoffsysteme (Emulgatoren und/oder Schutzkolloide), die u.a. eine ausreichende Lagerstabilität der Dispersion gewährleisten, hergestellt (vgl. US-A-4 077 932). Diese hydrophilen Hilfsstoffe verbleiben jedoch beim Verfilmen der Dispersionen im entstehenden Klebstoffilm und beeinträchtigen dessen Wasserbeständigkeit. Unter anderem laufen die Klebstoffilme bei Kontakt mit Wasser weiß an, was besonders bei der Anwendung selbstklebender transparenter Folien von Nachteil ist.

Aus der DE-A 37 20 860 sind lagerstabile wäßrige Polymerdispersionen bekannt, die durch nachträgliche Dispergierung eines Gemisches zweier Copolymerisate, unter Zusatz von Ammoniak und Polyhydraziden, in Wasser erhältlich sind, wobei wenigstens eines der beiden Copolymerisate eine Carbonylverbindung einpolymerisiert enthält. Die Verfilmungen dieser Dispersionen werden als Haftklebstoffe mit erhöhter Wasserbeständigkeit empfohlen. Nachteilig an diesen Haftklebstoffen ist jedoch, daß sie Polyhydrazide enthalten, die häufig in unerwünschter Weise bei Einwirkung von Wasser Hydrazin freisetzen.

Aufgabe der vorliegenden Erfindung war daher die Bereitstellung lagerstabiler wäßriger Kunstharzdispersionen, deren Verfilmungen den genannten Nachteil nicht aufweisen und insbesondere als Haftklebstoffe mit erhöhter Wasserbeständigkeit geeignet sind. Demgemäß wurden die eingangs definierten Kunstharzdispersionen gefunden.

Besonders geeignete Monomere I sind die Monocarbonsäuren Acryl- und Methacrylsäure, die Dicarbonsäuren Malein- und Itaconsäure, die Anhydride dieser Dicarbonsäuren sowie ihre Halbester mit den Alkoholen Ethanol, Isopropanol, n-Butanol und Glycolmono-n-butylether, unter denen die Acryl- und Methacrylsäure bevorzugt sind. In vorteilhafter Weise beträgt der Gewichtsanteil der Monomeren I am Gemisch A1 5 bis 12 Ge.%. Die Halbester der Dicarbonsäuren können auch in indirekter Weise in die Kunstharze A eingeführt werden, indem zugehörige Anhydride enthaltende Kunstharze A in organischer Lösung bei erhöhter Temperatur, 50 bis 100 °C, mit den entsprechenden Alkoholen umgesetzt werden. Als Monomere II kommen vor allem Methylacrylat, Methylmethacrylat, Ethylacrylat, Isopropylacrylat, n-Butylacrylat, n-Butylmethacrylat, Isobutylacrylat, Isobutylmethacrylat, tert.-Butylacrylat, 2-Ethylhexylacrylat sowie 2-Ethylhexylmethacrylat in Betracht, wobei n-Butylacrylat und Methylmethacrylat bevorzugt werden. Der Gewichtsanteil der Monomeren II an A1 beträgt bevorzugt 80 bis 95 Gew.%. Als Baustein III wird vorzugsweise n-Dodecylacrylat eingesetzt. Aus der Reihe der vinylaromatischen Monomeren (Monomere IV) sind Styrol, $\alpha$-Methylstyrol, Vinyltoluole, tert.-Butylstyrole sowie Halogenstyrole wie die Chlorstyrole zu nennen. Die Monomeren IV sind in A1 bevorzugt mit einem Gewichtsanteil von 5 bis 15 Gew.% enthalten, wobei vorzugsweise Styrol eingesetzt wird.

Als Verbindungen V enthält A1 in vorteilhafter Weise Mercaptosilane I mit n = 2 bis 4 einpolymerisiert. Bevorzugte Reste $R^1$, $R^2$ sind Wasserstoff und Methyl, während als Reste $R^3$ bis $R^5$ mit Vorteil Methyl, Ethyl, Methoxy und Ethoxy in Betracht kommen, wobei mindestens einer der Reste $R^3$ bis $R^5$ Methoxy oder Ethoxy sein muß. Besonders bevorzugt einpolymerisierte Mercaptosilane I sind 3-Mercaptopropyl-trimethoxysilan, 3-Mercaptopropyl-triethoxysilan sowie 3-Mercaptopropyl-methyl-dimethoxysilan. Die Mercaptosilane I sind bekannt und im Handel erhältlich. Die in A1 bevorzugte Einsatzmenge der Verbindungen V beträgt 0,2 bis 2 Gew.%.

Als Monomere VI kommen u.a. Vinylether niederer Alkanole, Vinylester niederer Alkancarbonsäuren, Diester der Malein-, Fumar-, Itacon-, Citracon- oder Mesaconsäure mit 1 bis 20 C-Atome enthaltenden einwertigen Alkoholen, die gegebenenfalls Ether- und/oder Thioethergruppen enthalten, Monoester der Acryl- oder Methacrylsäure mit einfachen Alkandiolen wie 1,2-Ethandiol, 1,3-Propandiol oder 1,4-Butandiol, Acryl- und Methacrylamid, Acryl- und Methacrylnitril, Monoolefine mit 3 bis 20 C-Atomen wie Propen, 1-Buten, 2-Buten, Isobuten, Pentene, Hexene sowie Diolefine wie Butadien und Isopren in Betracht. Vorzugsweise sind in A1 jedoch keine Monomeren (VI) enthalten.

Das Gemisch A2 enthält in vorteilhafter Weise 75 bis 98 Gew.% der Monomeren II, während der Gewichtsanteil der Monomeren IV und VI an A2 vorzugsweise 2 bis 25 Gew.% beträgt und die Verbindungen V in vorteilhafter Weise mit einem Gewichtsteil von 0,2 bis 2 Gew.% in A2 enthalten sind. Die Glastemperaturen der Homopolymerisate der Monomeren II sind beispielsweise in J. Brandrup, E.H. Immergut, Polymer Handbook 1st Ed. J. Wiley, New York 1966 und 2nd Ed. J. Wiley, New York, 1975 aufgeführt. Bevorzugt werden Kunstharze A, zu deren Herstellung 25 bis 45 Gew.-Teile A1 und 55 bis 75 Gew.-Teile A2 verwendet werden.

Bevorzugte Silane II sind 3-Glycidyloxypropyl-trimethoxysilan, 2-(3,4-Epoxycyclohexyl)-ethyltrimethoxysilan, 2-(3,4-Epoxy-4-methylcyclohexyl)proplmethyldiethoxysilan, 3-Glycidyloxypropyldimethylethoxysilan sowie 3-Glycidyloxypropylmethyldiethoxysilan. Bezogen auf die Menge des eingesetzten Kunstharzes A, enthalten die erfindungsgemäßen Dispersionen vorzugsweise 0,1 bis 2 Gew.% der Silane II.

Zur Herstellung von Kunstharzen A können die Gemische A1 und A2 in Lösung räumlich getrennt polymerisiert und anschließend miteinander gemischt oder räumlich vereint, jedoch nacheinander polymerisiert werden. Bevorzugt sind Kunstharze A, die durch aufeinanderfolgende, jedoch räumlich vereint ausgeführte Lösungspolymerisation der Gemische A1 und A2 erhältlich sind, wobei die Zugabe des zweiten Gemisches erfolgt, wenn das zuerst eingesetzte Gemisch bis zu einem Umsatz von 95, vorzugsweise 99 % auspolymerisiert ist. Dabei ist es ohne Bedeutung ob zuerst A1 und dann A2 polymerisiert wird, oder ob man umgekehrt vorgeht. Im übrigen wird das Verfahren der radikalischen Lösungspolymerisation zur Herstellung der Kunstharze A in an sich bekannter Weise durchgeführt. Bevorzugt sind Kunstharze A, die in Aceton einen K-Wert von 20 bis 50, vorzugsweise von 30 bis 40 aufweisen. Der K-Wert ist eine relative Viskositätszahl, die in Analogie zur DIN 53 726 bei 25 °C bestimmt wird. Gemessen wird hierbei die Fließgeschwindigkeit einer 3 gew.%igen Lösung des Kunstharzes A in Aceton, relativ zur Fließgeschwindigkeit von reinem Aceton. Er charakterisiert den mittleren Polymerisationsgrad des Polymerisates, der sich durch Steuerung der Polymerisationsbedingungen in bekannter Weise beeinflussen läßt. Zweckmäßigerweise erfolgt die Lösungspolymerisation in Gegenwart von 0,3 bis 5,0, vorzugsweise 0,5 bis 3,0 Gew.%, bezogen auf die Summe der Monomeren und der Verbindung V, radikalbildenden Initiatoren wie Azobiscarbonsäureamiden, Azobiscarbonsäurenitrilen oder Peroxiden wie tert.-Butyl-peroctoat. Die Polymerisationstemperatur beträgt in der Regel 50 bis 150, vorzugsweise 80 bis 130 °C. Gegebenenfalls wird in Gegenwart von Reglern wie Mercaptoethanol, tert.-Dodecylmercaptan oder Diisopropylxanthogendisulfid polymerisiert, die üblicherweise in Mengen von 0 bis 3 Gew.%, bezogen auf die Summe der Monomeren und der Verbindung V, vorhanden sein können.

Bezogen auf die Gesamtmenge an Monomeren und der Verbindung V beträgt die eingesetzte Menge Lösungsmittel üblicherweise 20 bis 35 Gew.%. Vorzugsweise werden Lösungsmittel verwendet, die sich aufgrund ihres Siedepunktes und/oder Azeotropbildung mit Wasser leicht aus den erfindungsgemäßen Dispersionen abdestillieren lassen. Besonders bevorzugt sind n-Butanol, iso-Butanol, Propanole, Ethanol und Toluol.

Zur Herstellung der erfindungsgemäßen Kunstharzdispersionen werden üblicherweise die erhaltenen organischen Lösungen der Kunstharze A zweckmäßigerweise durch Einrühren einer konzentrierten, bevorzugt 25 gew.%igen wäßrigen Ammoniak-Lösung und anschließendes Einrühren von reinem Wasser, bei erhöhter Temperatur (60 bis 80, vorzugsweise 70 °C) in eine Dispersion überführt und aus diesen Dispersionen das organische Lösungsmittel, z.B. destillativ, bis zu einem Gehalt von 5 Gew.% und darunter entfernt, wobei die dabei mitentfernte Menge an Wasser gegebenenfalls wieder zurückgeführt wird.

In einer alternativen Herstellungsweise wird entsprechend verfahren, die Entfernung des organischen Lösungsmittels jedoch bereits vor der Ammoniakzugabe durchgeführt.

Die zugegebene Menge an Ammoniak wird so bemessen, daß der pH-Wert der erfindungsgemäßen Dispersionen 6 bis 10, vorzugsweise 7 bis 9 beträgt. Ein Teil des neutralisierenden Ammoniaks, 0 bis 25 Mol.%, kann durch organische Amine, insbesondere Triethylamin, ersetzt werden. Vorzugsweise wird jedoch nur Ammoniak verwendet. Die Silane II werden bevorzugt nach Ammoniakzugabe und Entfernung des überschüssigen organischen Lösungsmittels zugerührt. Der Feststoffgehalt der erfindungsgemäßen Dispersionen wird durch Entfernen oder Zugeben von Wasser anwendungstechnisch vorteilhaft so gewählt, daß sich eine für die Verarbeitung günstige Viskosität ergibt. Er beträgt 35 bis 60, vorzugsweise 40 bis 55 Gew.%. Zusätzlich kann die Viskosität durch Zugabe von Verdickern modifiziert werden. Weitere mögliche Zusätze sind Harze oder Weichmacher, um die klebetechnischen Eigenschaften zu variieren. Die erfindungsgemäßen Kunstharzdispersionen sind im allgemeinen lagerstabil, d.h. sie zeigen bei längerer Lagerung in der Regel keine Zweiphasenbildung und kein verändertes Viskositäts-, Verfilmungs- oder Klebeverhalten. Ihre Verfilmungen weisen ein günstiges kohäsives und adhäsives Verhalten auf und eignen sich als Haftklebstoffe mit erhöhter Wasserbeständigkeit für selbstklebene Artikel, z.B. zur Herstellung von Klebebändern und Klebefolien, insbesondere von Schutzfolien und Dekorfolien. Als Trägermaterialien kommen u.a. Papier, Kunststoffolien oder Textilien in Betracht. Die Beschichtung der Trägermaterialien kann mit den an sich üblichen Auftragsaggregaten, z.B. mit Hilfe eines Walzenrakels, vorgenommen werden. Die Verfilmung der aufgetragenen dispersen Schicht wird im allgemeinen durch Erhitzen vorgenommen.

Beispiele

Beispiele 1 bis 5

Herstellung verschiedener erfindungsgemäßer Kunstharzdispersionen

Allgemeine Arbeitsvorschrift: Eine Lösung von 60 g eines Gemisches A1 in 60 g iso-Butanol wurden auf die Polymerisationstemperatur von 105 °C erhitzt und auf einmal mit 8 g einer Lösung L von tert.-Butylperoctoat in iso-Butanol versetzt. Anschließend wurden unter Aufrecht-erhaltung der Polymerisationstemperatur innerhalb von 1,5 h weitere 25 g der Lösung L sowie die Restmenge an A1 über getrennte Zuläufe kontinuierlich zugeführt und nach beendeter Zufuhr 1 h nachpolymerisiert. Danach wurde das Reaktionsgemisch bei konstanter Polymerisationstemperatur über getrennte Zuläufe innerhalb von 3 h mit weiteren 80 g der Lösung L und eines Gemischs A2 versetzt. Im Anschluß daran wurde die Restmenge der Lösung L innerhalb von 2 h kontinuierlich zugegeben und 1,5 h nachpolymerisiert. In die erhaltene iso-butanolische Polymerlösung wurden bei 70 °C 23,6 g einer 25 gew.%igen wäßrigen Ammoniaklösung und 1000 g Wasser eingerührt. Anschließend wurde das verwendete Lösungsmittel bis zu einem Gehalt von weniger als 1 Gew.% durch Vakuumdestillation abgetrennt, wobei die dabei mitentfernte Wassermenge wieder zugeführt wurde. Danach wurde zur Fertigstellung der erfindungsgemäßen Dispersion als Silan II 3-Glycidyloxopropyl-trimethoxysilan eingerührt. Die so erhaltenen Dispersionen weisen die in Tabelle 1 angegebenen Eigenschaften auf. Des weiteren enthält Tabelle 1 die quantitativen Angaben bezüglich der zu ihrer Herstellung eingesetzten Ausgangsstoffe.

Tabelle 1

| | Beispiel 1 | Beispiel 2 | Beispiel 3 | Beispiel 4 | Beispiel 5 |
|---|---|---|---|---|---|
| A1: | | | | | |
| Methylmethacrylat [g] | 48 (16) | 48 (16) | 48 (16) | 48 (16) | 24 (8) |
| n-Butylacrylat [g] | 227 (75,7) | 227 (75,7) | 227 (75,7) | 227 (75,7) | 251 (83,7) |
| Acrylsäure [g] | 25 (8,3) | 25 (8,3) | 25 (8,3) | 25 (8,3) | 25 (8,3) |

Die ( ) enthalten die Mengenangaben umgerechnet in Gew.% bezüglich A1.

| | Beispiel 1 | Beispiel 2 | Beispiel 3 | Beispiel 4 | Beispiel 5 |
|---|---|---|---|---|---|
| A2: | | | | | |
| Methylmethacrylat [g] | 112 (16) | 112 (16) | 112 (16) | 109,5 (15,6) | 56 (8) |
| n-Butylacrylat [g] | 583 (83,3) | 583 (83,3) | 583 (83,3) | 583 (83,3) | 639 (91,3) |
| 3-Mercaptopropyltrimethoxysilan [g] | 5 (0,7) | 5 (0,7) | 5 (0,7) | 7,5 (1,1) | 5 (0,7) |

Die ( ) enthalten die Mengenangaben umgerechnet in Gew.% bezüglich A2.

| | Beispiel 1 | Beispiel 2 | Beispiel 3 | Beispiel 4 | Beispiel 5 |
|---|---|---|---|---|---|
| L: | | | | | |
| tert.-Butylperoctoat [g] | 8 | 8 | 8 | 8 | 7 |
| iso-Butanol [g] | 192 | 192 | 192 | 192 | 192 |

Tabelle 1 - Forts.

| | Bei-spiel 1 | Bei-spiel 2 | Bei-spiel 3 | Bei-spiel 4 | Bei-spiel 5 |
|---|---|---|---|---|---|
| Silan II: | | | | | |
| 3-Glycidyloxypropyltrimethoxysilan [Gew.% bezogen auf Kunstharz A] | 0,1 | 0,3 | 0,5 | 1 | 0,5 |
| Dispersion: | | | | | |
| Feststoffgehalt [Gew.%] | 50,3 | 50,3 | 50,3 | 48,3 | 43,4 |
| iso-Butanolgehalt [Gew.%] | 0,53 | 0,53 | 0,53 | 0,45 | 0,71 |
| pH-Wert | 7,8 | 7,8 | 7,8 | 8,0 | 8,2 |

Beispiel 6

Prüfung der Haftklebeeigenschaften von Verfilmungen der Kunstharzdispersionen aus den Beispielen 1 bis 5

a) Herstellung von Prüfstreifen
Zur Herstellung von Prüfstreifen wurden die Dispersionen mit einer Trockenschichtdicke von 25 g/$m^2$ auf eine Polyesterfolie als Träger aufgetragen und 3 min bei 90 °C im Trockenschrank getrocknet. Aus der so erhaltenen selbstklebenden Folie wurden Streifen von 2 cm Breite und 5 cm Länge ausgeschnitten.

b) Prüfung der Kohäsion (Scherfestigkeit)

Zur Prüfung der inneren Festigkeit des Klebstoffilms einer erfindungsgemäßen Dispersion wurden die Prüfstreifen (a) auf einer Länge von 2,5 cm, unter Anwendung eines Gewichtes der Masse 2,5 kg, auf ein chromiertes Stahlblech (V2A) aufgerollt und 24 h unter Normal-bedingungen gelagert. Anschließend wurde das nicht behaftete Ende des Stahlblechs zwischen 2 Klemmbacken befestigt und das gegenüberliegende überstehende Klebeband frei hängend bei Temperaturen von 25 und 50 °C mit einem Gewicht der Masse 1 kg belastet. Maßstab für die innere Festigkeit des Klebstoffilms ist die Zeitdauer bis zum Aufbrechen des Klebstoffilms.

c) Anfangshaftung (Sofort-Schälfestigkeit oder Anfangs-Adhäsion)

Zur Bestimmung der Anfangshaftung der Prüfstreifen (a) auf der Oberfläche eines Substrates, wurden diese auf einer Länge von 2,5 cm, unter Anwendung eines Gewichtes der Masse 2,5 kg, auf ein chromiertes Stahlblech (V2A) aufgerollt. Unmittelbar danach wurde die Kraft bestimmt um die Prüfstreifen in einer Zugdehnungsprüfapparatur bei einem Abschälwinkel von 180 °C mit einer Geschwindigkeit von 300 mm/min rückwärts abzuziehen, ohne den Klebstoffilm aufzubrechen.

d) Wasserbeständigkeit

Zur Bestimmung der Wasserbeständigkeit wurden die erfindungsgemäßen Dispersionen mit einer Trockenschichtdicke von 20 µm auf eine transparente Polyesterfolie aufgetragen und 3 min bei 90 °C im Trockenschrank getrocknet. Anschließend wurde die Folie in einen Rahmen eingespannt und zur Bestimmung der Lichtdurchlässigkeit bei einer Temperatur von 20 °C in die wassergefüllte Küvette eines Photometers eingetaucht. Unmittelbar nach dem Eintauchen wurde auf eine Lichtdurchlässigkeit von 100 % geeicht und dann die Abnahme der Lichtdurchlässigkeit als Funktion der Zeit registriert. Die Verfilmungen der erfindungsgemäßen Dispersionen zeigten nach 30 min eine Abnahme von 2 bis 10 %, während die Verfilmungen hydrophile Hilfsstoffsysteme enthaltender Dispersionen im gleichen Zeitraum eine Abnahme von mindestens 25 % aufweisen.

Die Prüfwerte der Untersuchungen b) bis d) zeigt Tabelle 2.

Tabelle 2

| | Dispersion aus Beispiel | | | | |
|---|---|---|---|---|---|
| | 1 | 2 | 3 | 4 | 5 |
| Kohäsion (Stunden), 25 °C | 19,5 | 74 | 64,5 | > 120 | 3,13 |
| Kohäsion (Stunden), 50 °C | 1,9 | 6,0 | 4,9 | 10,0 | 0,4 |
| Sofort-Schälfestigfkeit (N) | 8,0 | 6,2 | 5,7 | 3,8 | 1,7 |
| Lichtdurchlässigkeit nach 30 min (%) | 96 | 97 | 98 | 91 | 95 |

**Patentansprüche**

**1.** Wäßrige Kunstharzdispersionen, bestehend aus

A) 35 bis 60 Gew.% Kunstharz, erhältlich durch räumlich getrennt ausgeführte und/oder durch nacheinander, jedoch räumlich vereint ausgeführte radikalische Lösungspolymerisation in einem organischen Lösungsmittel von 15 bis 70 Gew.-Teilen eines Gemisches A1 und 30 bis 85 Gew.-Teilen eines Gemisches A2, zusammengesetzt aus

A1:

a) 1,5 bis 15 Gew.% wenigstens eines Monomeren aus der Gruppe gebildet aus 3 bis 5 C-Atome enthaltenden $\alpha,\beta$-monoethylenisch ungesättigten Monocarbonsäuren, solchen Dicarbonsäuren, Anhydriden und Halbestern dieser Dicarbonsäuren mit 1 bis 8 C-Atome tragenden Alkanolen oder mit Glycolmonoethern (Monomere I)

b) 65 bis 98,5 Gew.% wenigstens eines Monomeren aus der Gruppe gebildet aus Acryl- und Methacrylsäureestern von $C_1$- bis $C_{10}$-Alkanolen (Monomere II),

c) 0 bis 10 Gew.% eines oder mehrerer Monomerer aus der Gruppe gebildet aus Acryl- und Methacrylsäureestern von $C_{11}$- bis $C_{20}$-Alkanolen (Monomere III),

d) 0 bis 20 Gew.% eines oder mehrerer vinylaromatischer Monomeren (Monomere IV),

e) 0 bis 5 Gew.% eines oder mehrerer Mercaptosilane der allgemeinen Formel I (Verbindung V)

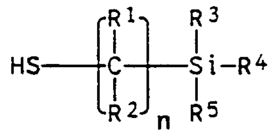 I,

in der die Variablen folgende Bedeutung haben:

| | |
|---|---|
| n | 1 bis 8 |
| $R^1$, $R^2$ | unabhängig voneinander Wasserstoff oder $C_1$- bis $C_4$-Alkylgruppen |
| $R^3$,$R^4$,$R^5$ | unabhängig voneinander $C_1$- bis $C_6$-Alkylgruppen oder $C_1$- bis $C_6$-Alkoxygruppen, mit der Maßgabe, daß mindestens einer der Reste $R^3$ bis $R^5$ eine Alkoxygruppe ist |

und

f) 0 bis 10 Gew.% eines oder mehrerer sonstiger copolymerisierbarer Monomeren (Monomere VI),

A2:

a) 60 bis 100 Gew.% wenigstens eines Monomeren II,

b) 0 bis 10 Gew.% eines oder mehrerer Monomeren III,

c) 0 bis 30 Gew.% eines oder mehrerer Monomeren IV und VI und

d) 0 bis 5 Gew.% einer oder mehrerer Verbindungen V,

mit der Maßgabe, daß die Summe aus A1 und A2 zu mehr als 65 % ihres Gewichtes solche Monomere II, deren Homopolymerisate eine Glastemperatur von 0 bis -70 °C aufweisen, sowie eine von 0 verschiedene Menge an Verbindungen V enthält,

B) bezogen auf das Kunstharz A, 0,05 bis 5 Gew.% wenigstens eines Silans der allgemeinen Formel II

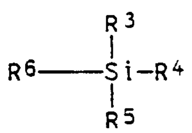 II,

in der $R^6$ ein eine Epoxy-Gruppe tragender Rest ist,

C) solchen Mengen mindestens einer Verbindung ausgewählt aus der Gruppe gebildet aus Ammoniak und organischem Amin, daß der pH-Wert der Dispersion 6 bis 10 beträgt,

D) 0 bis 5 Gew.% des organischen Lösungsmittels, in dem die Lösungspolymerisation durchgeführt wurde, und

E) Wasser als Rest.

**2.** Verfahren zur Herstellung von wäßrigen Kunstharzdispersionen gemäß Anspruch 1, dadurch gekennzeichnet, daß man in die organische Lösung oder Schmelze eines Kunstharzes A, erhältlich durch räumlich getrennt ausgeführte und/oder durch nacheinander, jedoch räumlich vereint ausgeführte radikalische Lösungspolymerisation von 15 bis 70 Gew.-Teilen eines Gemisches A1 und 30 bis 85 Gew.-Teilen eines Gemisches A2, wirksame Mengen an Ammoniak und/oder eines organischen Amins, Wasser sowie, bezogen auf das Kunstharz A, 0,05 bis 5 Gew.% wenigstens eines Silans II einrührt und gegebenenfalls das organische Lösungsmittel bis auf einen Gehalt von 5 Gew.-% und darunter entfernt.

**3.** Verwendung der Verfilmungen der Kunstharzdispersionen gemäß Anspruch 1 als Haftklebstoffe für selbstklebende Artikel.

## Claims

**1.** An aqueous synthetic resin dispersion consisting of

A) from 35 to 60% by weight of a synthetic resin, obtainable by free radical solution polymerization, carried out spatially separately or in succession but spatially at the same point, in an organic solvent, of from 15 to 70 parts by weight of a mixture A1 and from 30 to 85 parts by weight of a mixture A2, composed of

A1:

a) from 1.5 to 15% by weight of one or more monomers from the group consisting of $\alpha,\beta$-monoethylenicallyunsaturated monocarboxylic acids of 3 to 5 carbon atoms, dicarboxylic acids of this type, anhydrides and half-esters of these dicarboxylic acids with alkanols of 1 to 8 carbon atoms or with glycol monoethers (monomers I),
b) from 65 to 98.5% by weight of one or more monomers from the group consisting of acrylates and methacrylates of $C_1$-$C_{10}$-alkanols (monomers II),
c) from 0 to 10% by weight of one or more monomers from the group consisting of acrylates and methacrylates of $C_{11}$-$C_{20}$-alkanols (monomers III),
d) from 0 to 20% by weight of one or more vinylaromatic monomers (monomers IV),
e) from 0 to 5% by weight of one or more mercaptosilanes of the formula I (compound V)

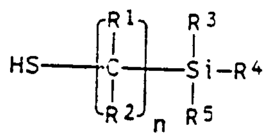

I

where n is from 1 to 8, $R^1$ and $R^2$ independently of one another are each hydrogen or $C_1$-$C_4$-alkyl and $R^3$, $R^4$ and $R^5$ independently of one another are each $C_1$-$C_6$-alkyl or $C_1$-$C_6$-alkoxy, with the proviso that one or more of the radicals $R^3$ to $R^5$ is alkoxy,
and
f) from 0 to 10% by weight of one or more other copolymerizable monomers (monomers VI),

and
A2:
a) from 60 to 100% by weight of one or more monomers II,
b) from 0 to 10% by weight of one or more monomers III,
c) from 0 to 30% by weight of one or more monomers IV and VI and
d) from 0 to 5% by weight of one or more compounds V,

with the proviso that more than 65% by weight of the sum total of A1 and A2 is accounted for by monomers II whose homopolymers have a glass transition temperature of from 0 to -70 °C, and an amount of compounds V which differs from 0,
B) from 0.05 to 5% by weight, based on the synthetic resin A, of one or more silanes of the formula II

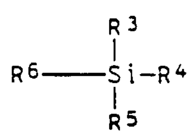

II

where $R^6$ is an epoxy-carrying radical,
C) sufficient amounts of one or more compounds selected from the group consisting of ammonia and organic amine for the dispersion to have a pH of 6-10,
and
D) from 0 to 5% by weight of the organic solvent in which the solution polymerization was carried out,
E) the remainder being water.

2. A process for the preparation of an aqueous synthetic resin dispersion as claimed in claim 1, wherein effective amounts of ammonia or of an organic amine, water and from 0.05 to 5% by weight, based on the synthetic resin A, of one or more silanes II are stirred into the organic solution or melt of a synthetic resin A, obtainable by free radical solution polymerization, carried out spatially separately or in succession but spatially at the same point, of from 15 to 70 parts by weight of a mixture A1 and from 30 to 85 parts by weight of a mixture A2, and, if necessary, the organic solvent is removed to a content of 5% by weight or less.

3. Use of films of the synthetic resin dispersions as claimed in claim 1 as contact adhesives for self-adhesive articles.

## Revendications

**1.** Dispersions aqueuses de résines synthétiques, constituées de

A) 35 à 60% en poids de résine synthétique, pouvant être obtenue par polymérisation radicalaire en solution dans des espaces séparés et/ou consécutivement mais dans un espace unique, dans un solvant organique, de 15 à 70 parties en poids d'un mélange A1 et de 30 à 85 parties en poids d'un mélange A2, composés de

A1:

a) 1,5 à 15% en poids d'au moins un monomère du groupe formé d'acides monocarboxyliques $\alpha,\beta$-monoéthyléniquement insaturés contenant 3 à 5 atomes de carbone, de tels acides dicarboxyliques, d'anhydrides et de semi-esters de ces acides dicarboxyliques avec des alcanols portant 1 à 8 atomes de carbone ou avec des monoéthers glycoliques (monomères I)

b) 65 à 98,5% en poids d'au moins un monomère du groupe formé d'esters de l'acide acrylique et méthacrylique et d'alcanols en $C_1$-$C_{10}$ (monomères II),

c) 0 à 10% en poids d'un ou plusieurs mononères du groupe formé d'esters de l'acide acrylique et méthacrylique et d'alcanols en $C_{11}$-$C_{20}$ (monomères III),

d) 0 à 20% en poids d'un ou plusieurs monomères vinylaromatiques (monomères IV),

e) 0 à 5% en poids d'un ou plusieurs mercaptosilanes de formule générale I (composé V)

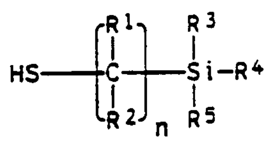

I,

dans laquelle les variables ont la signification suivante :

| | |
|---|---|
| n | 1 à 8 |
| $R^1$, $R^2$ | représentent indépendamment l'un de l'autre des atomes d'hydrogène ou des groupes alkyle en $C_1$-$C_4$ |
| $R^3$,$R^4$,$R^5$ | représentent indépendamment l'un de l'autre des groupes alkyle en $C_1$-$C_6$ ou alcoxy en $C_1$-$C_6$, à condition qu'au moins l'un des restes $R^3$ à $R^5$ soit un groupe alcoxy |

et

f) 0 à 10% en poids d'un ou plusieurs autres monomères copolymérisables (monomère VI),

A2:

a) 60 à 100% en poids d'au moins un monomère II,

b) 0 à 10% en poids d'un ou plusieurs monomères III,

c) 0 à 30% en poids d'un ou plusieurs monomères IV et VI et

d) 0 à 5% en poids d'un ou plusieurs composés V,

à condition que la somme de A1 et A2 contienne, à raison de plus de 65% de son poids, des monomères II dont les homopolymères présentent une température de transition vitreuse comprise entre 0 et -70 ° C, ainsi qu'une teneur non nulle en composés V,

B) 0,05 à 5% en poids, par rapport à la résine synthétique A, d'au moins un silane de formule générale II

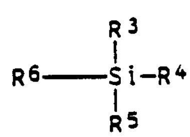

II,

dans laquelle $R^6$ est un reste portant un groupe époxy,

C) de telles quantités d'au moins un composé choisi dans le groupe formé de l'ammoniac et d'une amine organique, que la valeur du pH de la dispersion soit comprise entre 6 et 10,

D) 0 à 5% en poids du solvant organique, dans lequel la polymérisation en solution est effectuée, et

E) le reste étant de l'eau.

**2.** Procédé de préparation de dispersions aqueuses de résines synthétiques selon la revendication 1, caractérisé en ce que l'on mélange dans la solution organique ou dans la masse fondue d'une résine synthétique A, pouvant être obtenue par polymérisation radicalaire en solution dans des espaces séparés et/ou consécutivement mais dans un espace unique, de 15 à 70 parties en poids d'un mélange A1 et de 30 à 85 parties en poids d'un mélange A2, des quantités efficaces d'ammoniac et/ou d'une amine organique, de l'eau, ainsi que 0,05 à 5% en poids, par rapport à la résine synthétique A, d'au moins un silane II, et en ce que l'on élimine éventuellement le solvant organique jusqu'à une teneur de 5% en poids ou inférieure.

**3.** Utilisation des produits sous forme de films constitués des dispersions de résines synthétiques selon la revendication 1 comme masses auto-adhésives pour des produits auto-adhésifs.